# EUROPEAN PATENT APPLICATION

(11) **EP 1 519 357 A1**
(43) Date of publication of application: **30.03.2005**
(21) Application number: 04255605.0
(22) Date of filing: 16.09.2004
(51) Int. Cl.: G09G 3/36

(54) **Method and apparatus for displaying images and computer-readable recording medium for storing computer programs**

(30) Priority: 19.09.2003 KR 2003065222
(71) Applicant: Samsung Electronics Co., Ltd., Suwon-si, Gyeonggi-do (KR)
(72) Inventor: Choe, Wonhee, Gyeongju-si Gyeongsangbuk-do (KR); Lee, Seongdeok, Yeongtong-gu Suwon-si Gyeonggi-go (KR); Kim, Changyeong, 502-1305 Jinsan Maeul, Yongin-si Gyeonggi-do (KR)
(74) Representative: Greene, Simon Kenneth

(57) **Abstract**

A method and apparatus for displaying an image using a display pixel including at least one subpixel displaying one among four or more colors, and a computer-readable recording medium for storing a computer program for performing the method are provided. The method includes adjusting a target phase (location) (40) of a target subpixel using a difference between an absolute luminance value of a color to be displayed by the target subpixel and an absolute luminance value of a color to be displayed by at least one subpixel adjacent to the target subpixel; and obtaining a relative luminance value of the target subpixel from a relative luminance value of at least one image pixel using a target filter having the adjusted target phase as its center.

## Description

The present invention relates to a display device such as a liquid crystal display (LCD) or a plasma display panel (PDP), and more particularly, to an image display apparatus such as a monitor, a television, or a mobile display which includes a display device and displays a subpixel-based color image, an image display method therefor, and a computer-readable recording medium for storing a computer program.

FIG. 1 is a diagram showing an example of a filter having an RGB stripe arrangement, used in a conventional image display apparatus. The filter includes a plurality of subpixels.

FIG. 2 is a diagram showing an example of a color filter used in a image display apparatus. The color filter includes a plurality of subpixels.

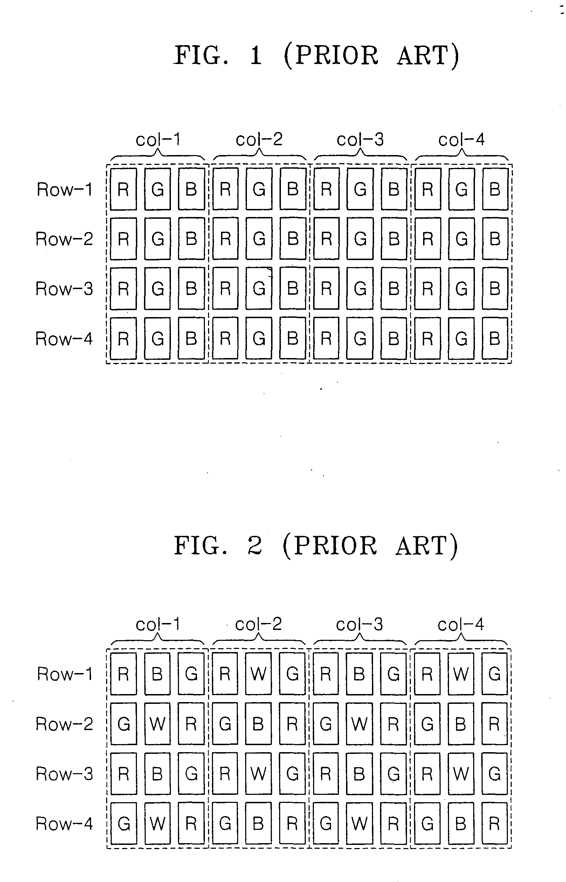

Referring to FIG. 1, each subpixel displays one color component among red (R), green (G), and blue (B) color components of an image signal. A single display pixel includes three subpixels displaying R, G, and B color components, respectively. The subpixels shown in FIG. 1 are individually controlled to display an image, and therefore, a horizontal resolution triples theoretically when a black and white image is displayed. Each subpixel shown in FIG. 2 displays one color component among R, G, B, and white (W) color components. Here, a display pixel includes a plurality of subpixels displaying R, G, and B color components, R, W, and G color components, G, W, and R color components, or G, B, and R color components.

Such a conventional image display apparatus, which displays an image by subpixel rendering, can decrease occurrence of a jagged pattern. The jagged pattern usually occurs at the boundary of a fine character such as an italic font when the resolution of an input content is higher than a resolution at which an image display apparatus can display an image.

However, a color image displayed on the conventional image display apparatus displaying an image by subpixel rendering may have a color fringe due to the phase shift of subpixels when a brightness value rapidly changes among the subpixels at the boundary of the color image. The color fringe may be different depending on the arrangement of subpixels. For example, in the stripe arrangement shown in FIG. 1, the color fringe may occur on a diagonal. In a delta arrangement, the color fringe may occur on a vertical straight line. In particular, the color fringe is more prominent when chrominance components are periodically arranged in units of two or more groups of subpixels, as shown in FIG. 2, than when chrominance components are periodically arranged in units of one display pixel as in the stripe arrangement shown in FIG. 1.

A conventional apparatus for displaying an image based on a subpixel is disclosed in U.S. Patent No. 5,341,153, entitled "Method of and Apparatus for Displaying a Multicolor Image." In the conventional method and apparatus for displaying a high resolution multicolor image on a lower resolution display, a single image pixel is expressed with being divided into subpixels displaying R, G, and B color components to increase the resolution of the display. However, such a conventional image display method and apparatus in which a subpixel of interest is expressed by an average of adjacent image pixels have the disadvantages of increasing image blurring and causing a color fringe when brightness rapidly changes among chrominance components.

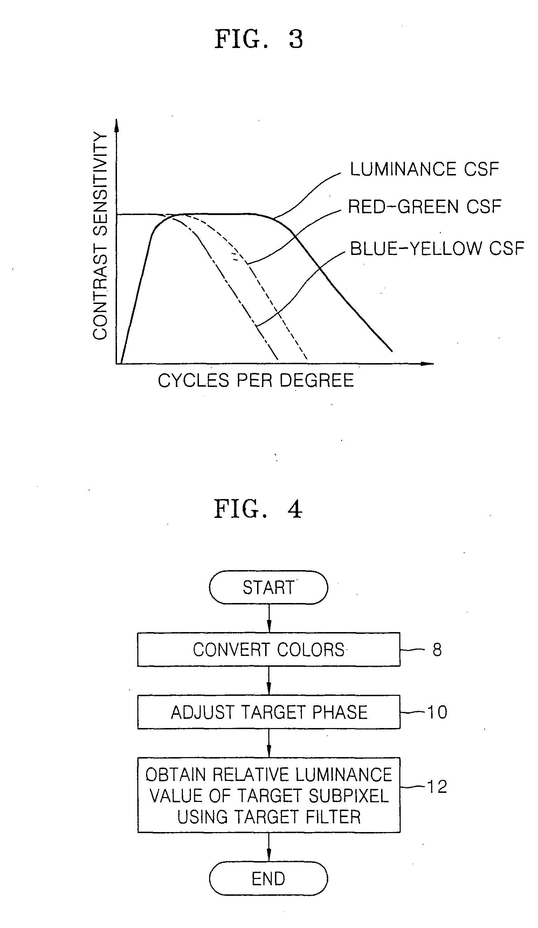

FIG. 3 is a graph illustrating characteristics of human sight according to a spatial frequency of an image. In the graph, the horizontal axis indicates cycles per degree (c/d), and the vertical axis indicates contrast sensitivity.

Unlike the conventional image display method and apparatus in which a subpixel is expressed by an average of adjacent image pixels, another conventional image display method and apparatus in which a chrominance component of a subpixel is expressed in consideration of characteristics of human sight is disclosed in U.S. Patent Publication No. 2002/0093521 A1, entitled "Methods and Systems for Improving Display Resolution in Images Using Subpixel Sampling and Visual Error Filtering." In the conventional image display method and apparatus disclosed in U.S. Patent Publication No. 2002/0093521 A1, a luminance value of a chrominance component to be expressed by a subpixel is calculated using an optimal filter that is designed in consideration of the characteristics of human sight, i.e., the theoretical visibility range of a user, thereby improving a display resolution. As shown in FIG. 3, the human sight is very sensitive to the luminance Contrast Sensitivity Function (CSF) of an image but is less sensible to a chrominance component such as red-green CSF or blue-yellow CSF of the image. However, since the optimal filter is designed in consideration of the theoretical visibility range, the above-described image display method and apparatus are not suitable for a mobile environment, i.e., when a fluid visibility range needs to be secured to display an image. Moreover, since the conventional image display method and apparatus use the filter designed to operate in an opponent color space, unnecessary complex color space conversion is required.

In addition, in the conventional image display methods and apparatuses, each subpixel can display only one among three colors, as shown in FIG. 1, but a high-resolution color image cannot be displayed without a color fringe when each subpixel displays one among four colors, as shown in FIG. 2, or one among more than four colors.

According to an aspect of the present invention, there is provided a method of displaying an image using a display pixel including at least one subpixel displaying one among four or more colors. The method comprises adjusting a target phase of a target subpixel using a difference between an absolute luminance value of a color to be displayed by the target subpixel and an absolute luminance value of a color to be displayed by at least one subpixel adjacent to the target subpixel, and obtaining a relative luminance value of the target subpixel from a relative luminance value of at least one image pixel using a target filter having the adjusted target phase as its center. Preferably, a brightness of the color displayed by the target subpixel corresponds to the relative luminance value of the target subpixel.

Note that in this application the term "target phase" is used to describe the location of the center of the filter used to calculate the relative luminance of the target sub-pixel. The relative luminance of the target sub-pixel is calculated from weighted average of the RGBW values (for example) of the at least one image pixel within the filter window having its center at the "target phase".

Thus, the invention relates to a method of displaying an image defined by a plurality of image pixels using a display pixel having at least one sub-pixel displaying one among four or more colors, the method comprising: determining a target filter center of a target sub-pixel based on the absolute luminance value of the color to be displayed on the target sub-pixel and the absolute luminance values of a color to be displayed by at least one sub-pixel adjacent to the target sub-pixel; calculating the relative luminance of the target sub-pixel by applying a filter centered on the target filter center to the image pixels; and displaying on the target sub-pixel a color having a brightness corresponding to the calculated relative luminance.

According to another aspect of the present invention, there is provided an apparatus for displaying an image using a display pixel including at least one subpixel displaying one among four or more colors. The apparatus comprises a phase adjustment unit which adjusts a target phase of a target subpixel using a difference between an absolute luminance value of a color to be displayed by the target subpixel and an absolute luminance value of a color to be displayed by at least one subpixel adjacent to the target subpixel, and a luminance value generation unit which generates a relative luminance value of the target subpixel from a relative luminance value of at least one image pixel using a target filter having the adjusted target phase as its center. Preferably, a brightness of the color displayed by the target subpixel corresponds to the generated relative luminance value of the target subpixel.

According to still another aspect of the present invention, there is provided a computer-readable recording medium for storing at least one computer program to control an apparatus for displaying an image using a display pixel including at least one subpixel displaying one among four or more colors. The computer program adjusts a target phase of a target subpixel using a difference between an absolute luminance value of a color to be displayed by the target subpixel and an absolute luminance value of a color to be displayed by at least one subpixel adjacent to the target subpixel, and obtains a relative luminance value of the target subpixel from a relative luminance value of at least one image pixel using a target filter having the adjusted target phase as its center. Preferably, a brightness of the color displayed by the target subpixel corresponds to the relative luminance value of the target subpixel.

The present invention provides an image display method for performing subpixel rendering to minimize a color fringe where each subpixel displays one among four or more colors.

The present invention also provides an image display apparatus for performing subpixel rendering to minimize a color fringe where each subpixel displays one among four or more colors.

The present invention also provides a computer-readable recording medium for storing a computer program for performing subpixel rendering to minimize a color fringe where each subpixel displays one among four or more colors.

The above and other features and advantages of the present invention will become more apparent by describing in detail preferred embodiments thereof with reference to the attached drawings in which:
FIG. 1 is a diagram showing an example of a filter having an RGB stripe arrangement, used in a conventional image display apparatus;
FIG. 2 is a diagram showing an example of a color filter used in a conventional image display apparatus;
FIG. 3 is a graph illustrating characteristics of human sight according to a spatial frequency of an image;
FIG. 4 is a flowchart of an image display method according to the present invention;

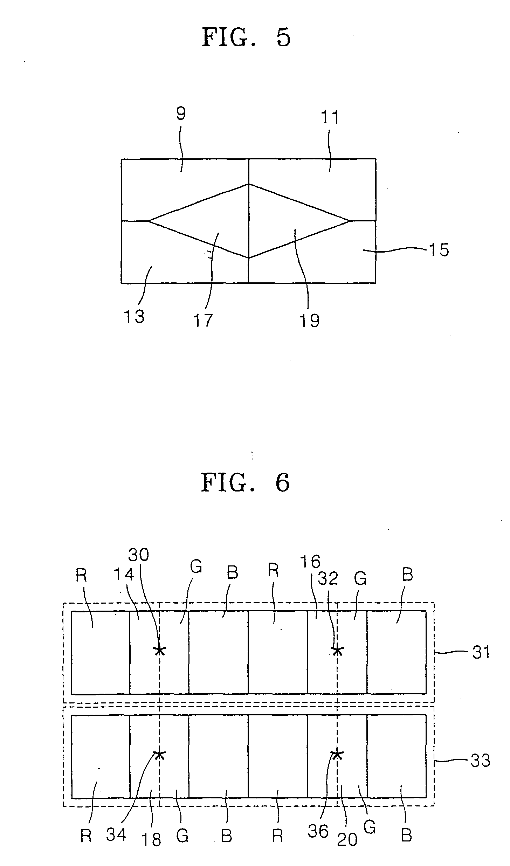

FIG. 5 is a diagram showing an example of an arrangement of subpixels;
FIG. 6 is a diagram showing an example of an arrangement of subpixels, each subpixel displaying one among three chrominance components in physical space;

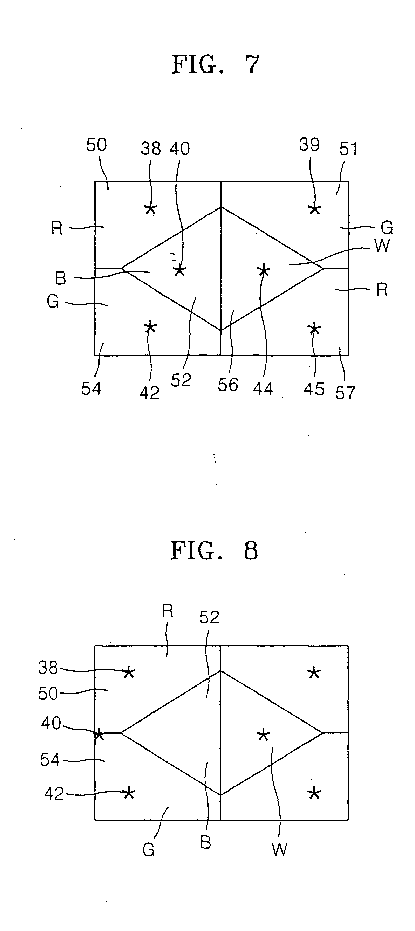

FIG. 7 is a diagram showing an example of an arrangement of subpixels, each subpixel displaying one among four chrominance components in physical space;
FIG. 8 is a diagram showing another example of an arrangement of subpixels, each subpixel displaying one among four chrominance components in physical space;

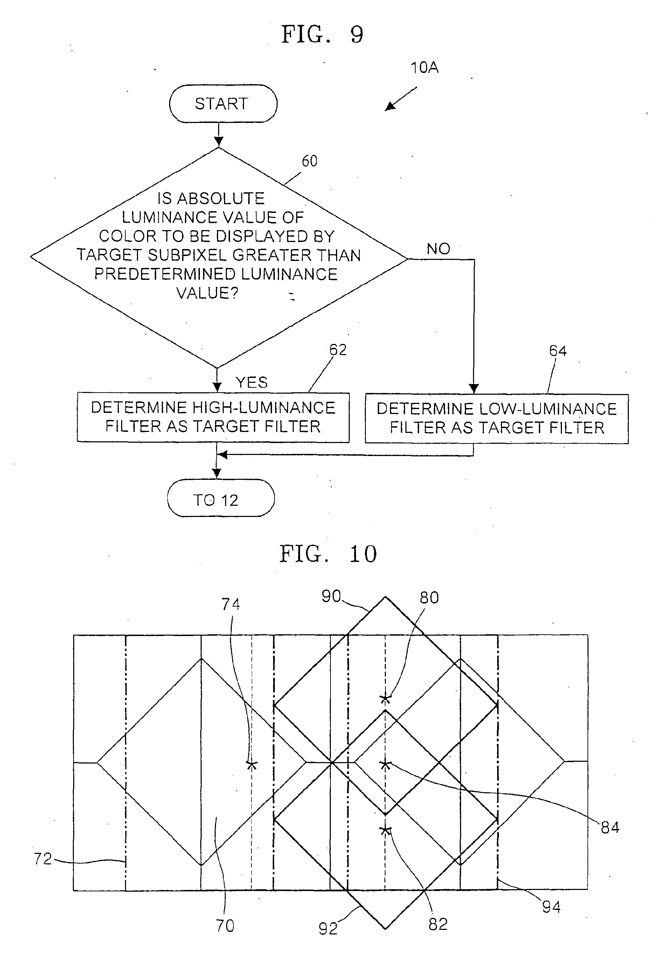

FIG. 9 is a flowchart of an embodiment of step 10 shown in FIG. 4 according to the present invention;
FIG. 10 is a diagram showing an example of a target filter to be applied to a target subpixel displaying a color having a relatively high absolute luminance value;

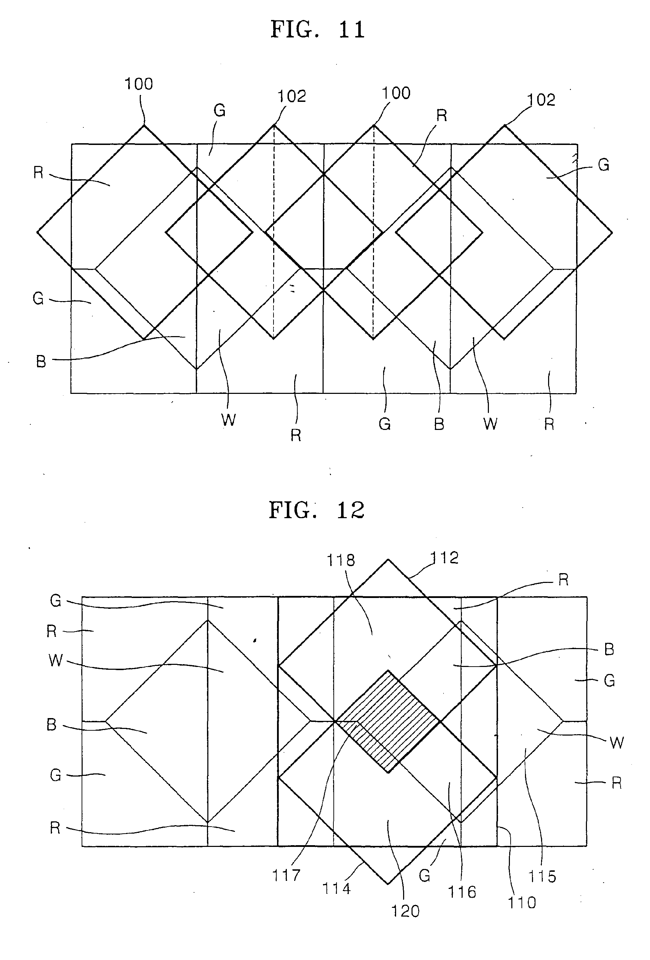

FIG. 11 is a diagram showing an example of a target filter to be applied to a target subpixel displaying a color having a relatively low absolute luminance value;
FIG. 12 is a diagram showing another example of a target filter to be applied to a target subpixel displaying a color having a relatively low absolute luminance value;

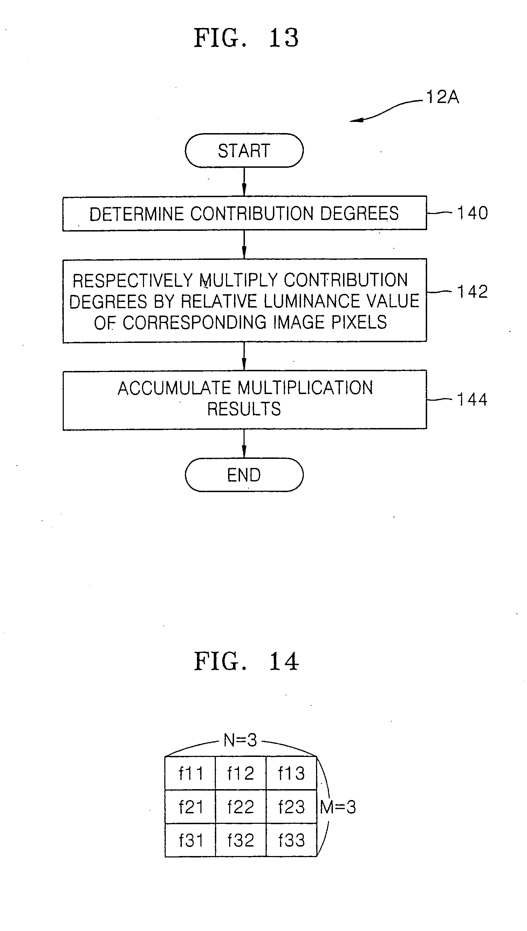

FIG. 13 is a flowchart of an embodiment of step 12 shown in FIG. 4 according to the present invention;
FIG. 14 is a diagram of an example of a target filter;

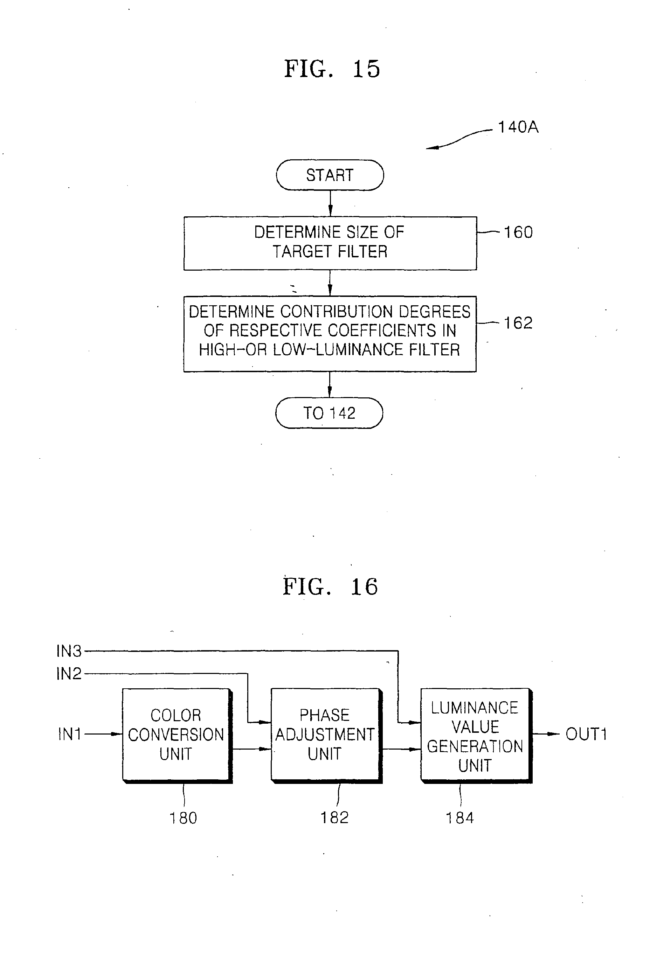

FIG. 15 is a flowchart of an embodiment of step 140 shown in FIG. 13 according to the present invention;
FIG. 16 is a block diagram of an image display apparatus according to an embodiment of the present invention;

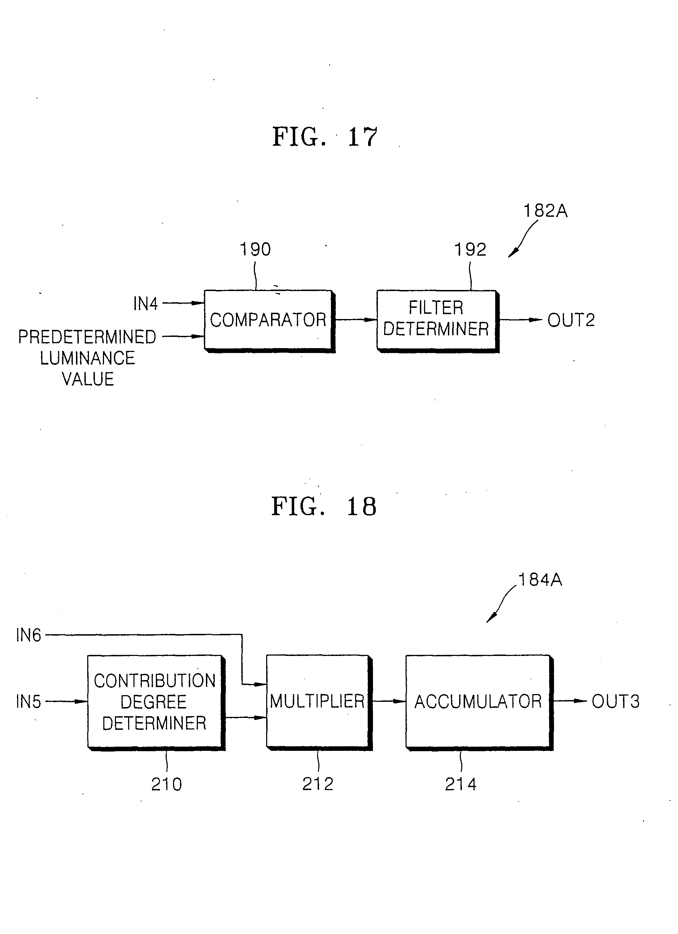

FIG. 17 is a block diagram of a preferred embodiment of a phase adjustment unit shown in FIG. 16 according to the present invention; and
FIG. 18 is a block diagram of a preferred embodiment of a luminance value generation unit shown in FIG. 16 according to the present invention.

Hereinafter, an image display method according to the present invention will be described with reference to the attached drawings.

FIG. 4 is a flowchart of an image display method according to the present invention. The image display method includes converting colors in step 8, adjusting a target phase in step 10, and obtaining a relative luminance value of a target subpixel in step 12.

FIG. 5 is a diagram showing an example of an arrangement of subpixels. The arrangement includes six subpixels 9, 11, 13, 15, 17, and 19.

In an image display method of the present invention, an image is displayed by display pixels as follows. Here, a single display pixel includes at least one subpixel. For example, the subpixels 9, 11, and 17 may asymmetrically constitute a display pixel, and the subpixels 13, 15, and 19 may asymmetrically constitute another display pixel. Each of the subpixels 9, 11, 13, 15, 17, and 19 displays one among four or more colors that may include, for example, red (R), green (G), blue (B), and white (W). For example, the six subpixels 9, 11, 13, 15, 17, and 19 may display R, G, G, R, B, and W, respectively.

According to the present invention, the four or more colors may necessarily include a color having a high absolute luminance value, e.g., W.

In an image display method according to an embodiment of the present invention, three externally input colors, for example, R, G, and B, are converted into four or more colors, for example, R, G, B, and W, in step 8. As well as color conversion, gamma compensation can be performed in step 8. In another embodiment of the present invention, the image display method shown in FIG. 1 may not include step 8.

A target phase of a target subpixel is adjusted using a difference between an absolute luminance value of color to be displayed by the target subpixel and an absolute luminance value of color to be displayed by at least one subpixel adjacent to the target subpixel in step 10. A target subpixel is defined as a subpixel that is a current target in obtaining a relative luminance value according to an image display method of the present invention. An absolute luminance value is defined as a luminance value that identifies each of the colors included in a color gamut from white to black and is distinguished from a relative luminance value defined as a degree of brightness of each color included in the color gamut. A phase indicates the center of a filter corresponding to a subpixel. Accordingly, the center of a target filter corresponding to a target subpixel is defined as a target phase, and the center of an adjacent filter corresponding to a subpixel adjacent to the target subpixel is defined as an adjacent phase.

According to a first embodiment of the present invention, when an adjacent subpixel displays color having a high absolute luminance value, a target phase may be shifted such that a distance between the target phase and the center of gravity of the adjacent subpixel becomes farther. The center of gravity indicates the center of an area occupied by a subpixel in physical space. For example, when an adjacent subpixel displays white, a target phase needs to be shifted such that a distance between the target phase and the center of gravity of the adjacent subpixel displaying white becomes larger in order to reduce a color fringe. However, when the target phase is shifted too far from the center of gravity of the adjacent subpixel, a resolution of an image displayed by the target subpixel decreases. Accordingly, an appropriate trade-off may be set.

FIG. 6 is a diagram showing an example of an arrangement of subpixels, each of which displays one among three chrominance components in physical space. Reference numerals 30, 32, 34, and 36 indicate the centers of gravity (*) of subpixels 14, 16, 18, and 20, respectively, displaying G.

FIG. 7 is a diagram showing an example of an arrangement of subpixels, each of which displays one among four chrominance components in physical space. Reference numerals 38, 39, 40, 42, 44, and 45 respectively denote the centers of gravity (*) of subpixels 50, 51, 52, 54, 56, and 57 which respectively display R, G, B, G, W, and G.

FIG. 8 is a diagram showing another example of an arrangement of subpixels, each of which displays one among four chrominance components in physical space. The reference numerals 38, 40, and 42 respectively denote the centers of gravity (*) of the subpixels 50, 52, and 54 which respectively display R, B, and G.

Each subpixel shown in FIG. 6 can display one among three colors, R, G, and B. When each subpixel shown in FIG. 6 can display a fourth color, for example, W, in addition to the three colors, R, G, and B, a physical space of each subpixel shown in FIG. 6 can be changed into that shown in FIG. 7. When a horizontal resolution of half of the subpixels shown in FIG. 6 is compared with that shown in FIG. 7, an upper subpixel group 31 shown in FIG. 6 has only two phases 30 and 32 while an upper subpixel group composed of the subpixels 50, 51, and 52 shown in FIG. 7 has three phases 38, 39, and 40. Similarly, a lower subpixel group 33 shown in FIG. 6 has only two phases 34 and 36 while a lower subpixel group composed of the subpixels 54, 56, and 57 shown in FIG. 7 has three phases 42, 44, and 45. Accordingly, when the subpixels shown in FIG. 7 are used, a resolution of an image can be increased by 1.5 times as compared to when the subpixel shown in FIG. 6 are used.

When the target subpixel 52 displays B and the adjacent subpixel 56 displays a color, for example, W, having a high absolute luminance value, the target phase 40 can be shifted such that a distance between the target phase 40 and the center-of-gravity 44 of the adjacent subpixel 56 becomes larger. For example, the target phase 40 shown in FIG. 7 can be shifted to the left, as shown in FIG. 8.

According to a second embodiment of the present invention, a target filter can be made to overlap at least one adjacent filter by shifting a target phase and an adjacent phase of at lease one adjacent subpixel.

According to a third embodiment of the present invention, a target filter can be made to overlap one or more adjacent filters in a single common area by shifting a target phase and an adjacent phase of at lease one adjacent subpixel.

When a target filter overlaps at least one adjacent filter, as described in the second and third embodiments, a color fringe caused by a radical change in brightness of color between subpixels can be minimized.

The second and third embodiments of the present invention will be described in detail with reference to FIGS. 7 and 8.

According to the second and third embodiments, all of the target phase 40 and the adjacent phases 38 and 42 can be shifted to the left, as shown in FIG. 8. In this situation, a target filter having the shifted target phase 40 shown in FIG. 8 as its center may overlap adjacent filters respectively having the shifted adjacent phases 38 and 42 shown in FIG. 8 as their centers. Since the phase 40 of the subpixel 52 displaying B and the phases 38 and 42 of the respective subpixels 50 and 54 respectively displaying R and G are shifted, the influence of W upon B can be reduced.

FIG. 9 is a flowchart of an embodiment 10A of step 10 shown in FIG. 4 according to the present invention. Step 10A includes determining a type of target filter according to a result of comparing an absolute luminance value of a color to be displayed by a target subpixel with a predetermined luminance value in steps 60 through 64.

According to the present invention, it is determined whether the absolute luminance value of the color to be displayed by the target subpixel is greater than the predetermined luminance value in step 60. The predetermined luminance value is set to be close to an absolute luminance value of green, according to the present invention.

When it is determined that the absolute luminance value of the color to be displayed by the target subpixel is greater than the predetermined luminance value, a high-luminance filter is determined as the target filter in step 62, and the process goes to step 12. The color displayed by the target subpixel having the higher absolute luminance value than the predetermined luminance value is Y in YCbCr, luminance (L) in Lab, white, cyan, or yellow in an opponent color space.

FIG. 10 is a diagram showing an example of a target filter to be applied to a target subpixel displaying a color having a relatively high absolute luminance value.

According to embodiments of the present invention, when it is determined that an absolute luminance value of a color to be displayed by a target subpixel 70 is greater than the predetermined luminance value, a target phase can be positioned at a center-of-gravity 74 of the target subpixel 70 in physical space in step 62. Accordingly, a target phase positioned at the center-of-gravity 74 becomes the center of the high-luminance filter determined as a target filter 72. As described above, the high-luminance filter to be applied to a subpixel displaying a color having a relatively high absolute luminance value is formed to be independent of adjacent filters.

According to embodiments of the present invention, when it is determined that an absolute luminance value of a color to be displayed by the target subpixel 70 is greater than the predetermined luminance value, the target phase 74 is shifted such that a distance between the target phase 74 and the adjacent phases 80, 82, and 84 becomes larger in step 62. Low-luminance filters 90, 92, and 94 have the adjacent phases 80, 82, and 84, respectively, as their centers. The shifted position of the target phase becomes the center 74 of the high-luminance filter determined as the target filter 72. In other words, when adjacent filters are low-luminance filters, a target filter is shifted such that a distance between the target filter and the adjacent filters becomes larger.

Meanwhile, when it is determined that the absolute luminance value of the color to be displayed by the target subpixel is equal to or less than the predetermined luminance value, a low-luminance filter is determined as the target filter in step 64, and the process goes to step 12.

FIG. 11 is a diagram showing an example of a target filter to be applied to a target subpixel displaying a color having a relatively low absolute luminance value.

According to embodiments of the present invention, when it is determined that an absolute luminance value of a color to be displayed by the target subpixel 50 shown in FIG. 7 is equal to or less than the predetermined luminance value, a target phase is positioned at the center-of-gravity 38 of the target subpixel 50, and an adjacent phase of the adjacent subpixel 54 is positioned at the center-of-gravity 42 of the adjacent subpixel 54. Then, the target phase and the adjacent phase positioned at the centers-of-gravity 38 and 42, respectively, are shifted, as shown in FIG. 8, so that, for example, a target filter 100 overlaps an adjacent filter 102, as shown in FIG. 11. In this situation, the target filter 100 corresponds to the low-luminance filter in step 64 and is used to obtain a relative luminance value of the target subpixel 50 displaying R.. A color having a low absolute luminance value have a high saturation.

Similarly, when it is determined that an absolute luminance value of a color to be displayed by the target subpixel 54 shown in FIG. 7 is equal to or less than the predetermined luminance value, a target phase is positioned at the center-of-gravity 42 of the target subpixel 54, and an adjacent phase of the adjacent subpixel 50 is positioned at the center-of-gravity 38 of the adjacent subpixel 50. Then, the target phase and the adjacent phase positioned at the centers-of-gravity 42 and 38, respectively, are shifted, as shown in FIG. 8, so that, for example, a target filter 102 overlaps an adjacent filter 100, as shown in FIG. 11. In this situation, the target filter 102 corresponds to the low-luminance filter in step 64 to be used to obtain a relative luminance value of the target subpixel 54 displaying G.

Consequently, referring to FIG. 11, RGBWGR is not regarded as a group, but RG or GR is regarded as a group so that one of two types of the low-luminance filters 100 and 102 is determined as a target filter.

FIG. 12 is a diagram showing another example of a target filter to be applied to a target subpixel displaying a color having a relatively low absolute luminance value.

According to embodiments of the present invention, when it is determined that an absolute luminance value of a color displayed by a target subpixel 116 is equal to or less than the predetermined luminance value, a target phase positioned at the center of gravity of the target subpixel 116 and adjacent phases respectively positioned at the centers of gravity of adjacent subpixels 118 and 120 are shifted so that a target filter 110 overlaps adjacent filters 112 and 114. Here, the low-luminance filter 110 overlapping the adjacent filters 112 and 114 is determined as a target filter corresponding to the target subpixel 116. In other words, the target filter 110 shown in FIG. 12 is used to obtain a relative luminance value of the target subpixel 116 when an adjacent subpixel 115 displaying W is adjacent to the target subpixel 116 displaying B. Here, if the target filter 110 and the adjacent filters 112 and 114 are made to overlap one another in a hatched single common area 117, R, G, and B are mixed so that a color similar to W is displayed. As a result, a color fringe occurring between B and W when a target phase is positioned at the center of gravity of the target subpixel 116 can be eliminated. Consequently, referring to FIG. 12, the target filter 110 is designed such that the subpixel 116 displaying B and the adjacent subpixels 118 and 120 are regarded as constituting a group so that the adjacent phases of the respective adjacent filters 112 and 114 are the same as the target phase of the target filter 110.

The high-luminance filter and the low-luminance filter may change according to the position of a display pixel including a target subpixel in physical space.

After step 10 shown in FIG. 4, the relative luminance value of the target subpixel is obtained from a relative luminance value of at least one image pixel using the target filter having the adjusted target phase as its center in step 12. Obtaining the relative luminance value of the target subpixel is referred to as target subpixel rendering. The color displayed by the target subpixel has brightness corresponding to the relative luminance value of the target subpixel, which is obtained in step 12.

FIG. 13 is a flowchart of an embodiment 12A of step 12 shown in FIG. 4 according to the present invention. Step 12A includes obtaining the relative luminance value of the target subpixel by accumulating results of respectively multiplying contributions by relative luminance values of image pixels in steps 140 through 144.

After step 10, contribution degrees of respective M×N coefficients included in the target filter (where M and N are positive integers equal to or greater than 1) are determined in step 140. A contribution degree indicates how much a coefficient included in the target filter contributes to displaying the color of the target subpixel. For example, an image pixel corresponding to a coefficient having a contribution degree of "0" does not contribute to the color display of a display subpixel at all while an image pixel corresponding to a coefficient having a contribution degree of "1" fully contributes to the color display of the display subpixel. Such a contribution degree may change according to at least one among a ratio between a resolution of an image and a resolution of an image display apparatus, an arrangement of subpixels, a color or luminance to be displayed by a subpixel, and a type of target filter. A type of target filter indicates whether a target filter is a high-luminance filter or a low-luminance filter.

FIG. 14 is a diagram of an example of a target filter which includes nine coefficients f11, f12, f13, f21, f22, f23, f31, f32, and f33.

For example, when M=N=3, the target filter can be implemented as shown in FIG. 14. In this situation, contribution degrees of the respective coefficients f11 through f33 are determined in step 140.

FIG. 15 is a flowchart of an embodiment 140A of step 140 shown in FIG. 13 according to the present invention. Step 140A includes determining a size of the target filter in step 160 and determining the contribution degrees in step 162.

More specifically, a size M×N of the target filter is determined in step 160. The size of the target filter may be determined according to a ratio between a resolution of an image and a resolution of an image display apparatus. For example, when an image has a resolution of A×B and an image display apparatus has a resolution of C×D, the size of the target filter may be determined such that M is proportional to A/C and N is proportional to B/D.

After step 160, contribution degrees of respective coefficients included in the high- or low-luminance filter determined as the target filter are determined using the determined size of the target filter in step 162.

After step 140, the determined contribution degrees are respectively multiplied by relative luminance values of image pixels corresponding to the coefficients of the target filter in step 142.

For example, when the target filter is implemented as shown in FIG. 14, the contribution degrees of the respective nine coefficients f11 through f33, which are determined in step 140, are respectively multiplied by relative luminance values of image pixels corresponding to the coefficients f11 through f33, respectively, in step 142 so that the image pixels corresponding to the coefficients f11 through f33, respectively, are displayed in a single subpixel. After step 142, M×N multiplication results are accumulated, and an accumulation result is determined as the relative luminance value of the target subpixel in step 144.

Steps 142 and 144 are expressed as Formula (1).

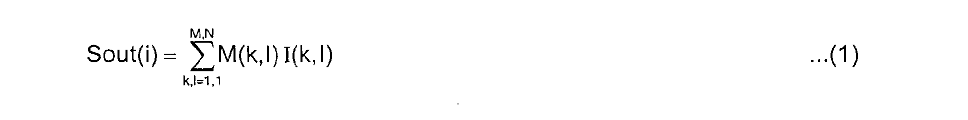

Here, Sout(i) indicates a relative luminance value of a target subpixel. (k, l) is an index of a coefficient fkl included in the target filter, 1 ≤ k ≤ M, and 1 ≤ l ≤ N. M(k, l) is a contribution degree of the coefficient fkl, and 0 ≤ M(k, l) ≤ 1. I(k, l) indicates a relative luminance value of an image pixel corresponding to the coefficient fkl. In other words, a target filter having M×N coefficient(s) converts the relative luminance value(s) of respective M×N image pixel(s) into a relative luminance value to be expressed by a single subpixel.

According to embodiments of the present invention, taking into account a visual modulation transfer function (MTF) characteristic, the target filter can be formed to be a mask having a predetermined shape by minimizing a contribution of a particular coefficient among the coefficient(s) included in the target filter, and the relative luminance value of the target subpixel can be obtained from a relative luminance value of at least one image pixel using the mask in step 12.

For example, when the target filter is implemented, as shown in FIG. 14, and when the contribution degrees of particular coefficients f11, f13, f31, and f33 among the coefficients f11 through f33 included in the target filter are set to be "0", the target filter becomes a mask having a predetermined shape, i.e., a diamond shape. In this situation, the filters 90, 92, 100, 102, 112, and 114 shown in FIGS. 10, 11, and 12 have a diamond shape.

Alternatively, when the target filter is implemented, as shown in FIG. 14, the target filter can be made to have a predetermined shape, i.e., a slim quadrangular shape, by setting contribution degrees of particular coefficients f13, f23, and f33 among the coefficients f11 through f33 included in the target filter to "0". In this situation, the filter 110 shown in FIG. 12 has a slim quadrangular shape.

Alternatively, when the target filter is implemented, as shown in FIG. 14, the target filter can be made to have a predetermined shape, i.e., a flat quadrangular shape, by setting contribution degrees of particular coefficients f31, f32, and f33 among the coefficients f11 through f33 included in the target filter to "0". In this situation, the filter 72 shown in FIG. 10 has a flat quadrangular shape.

Consequently, in an image display method of the present invention, based on the fact that human perception of spatial resolution of color is lower than human perception of brightness, as shown in FIG. 3, the center of gravity of a target subpixel is made to be a target phase with respect to a target filter of the target subpixel displaying a color having a relatively high absolute luminance value, as shown in FIG. 10, thereby improving visual resolution, i.e., spatial resolution. In other words, when a target filter to be used to obtain a relative luminance value of a target subpixel displaying a color having a relatively high absolute luminance value is designed, a high-luminance filter that increases the spatial resolution of an image to be displayed by the target subpixel is determined as the target filter in an image display method of the present invention.

In addition, in an image display method of the present invention, for a target filter of a target subpixel displaying a color having a relatively low absolute luminance value, the target filter is made to overlap adjacent filters, as shown in FIG. 11 or 12, so that color fringes are counterbalanced. In other words, when a target filter to be used to obtain a relative luminance value of a target subpixel displaying a color having a relatively low absolute luminance value is designed, a low-luminance filter that is designed to mix a chrominance component of an image to be displayed by the target subpixel with adjacent chrominance components is determined as the target filter, in a image display method of the present invention.

Hereinafter, the structure and operations of an image display apparatus according to the present invention will be described with reference to the attached drawings.

FIG. 16 is a block diagram of an image display apparatus according to an embodiment of the present invention. The image display apparatus includes a color conversion unit 180, a phase adjustment unit 182, and a luminance value generation unit 184.

The image display apparatus shown in FIG. 16 can perform the image display method shown in FIG. 4. In other words, the image display apparatus can display an image using a display pixel including at least one subpixel.

To perform step 8 shown in FIG. 4, the color conversion unit 180 of the image display apparatus shown in FIG. 16 converts three colors, e.g., R, G, and B, externally received through an input terminal IN1 into four or more colors, e.g., R, G, B, and W, and outputs a conversion result to the phase adjustment unit 182. When the image display method shown in FIG. 4 does not include step 8, the image display apparatus shown in FIG. 16 may not include the color conversion unit 180. In this situation, the phase adjustment unit 182 directly receives multiple colors through an input terminal IN2 from the outside.

To perform step 10, the phase adjustment unit 182 adjusts a target phase of a target subpixel using a difference between an absolute luminance value of a color to be displayed by the target subpixel and an absolute luminance value of a color to be displayed by a subpixel adjacent to the target subpixel. For this operation, the phase adjustment unit 182 may externally receive the absolute luminance value of the color to be displayed by the target subpixel and the absolute luminance value of the color to be displayed by the subpixel adjacent to the target subpixel through the input terminal IN2 or may receive them from the color conversion unit 180.

The phase adjustment unit 182 can be used to perform the above-described embodiments of an image display method. For example, to perform the above-described first embodiment, the phase adjustment unit 182 can shift a target phase such that a distance between the target phase and the center of gravity of an adjacent subpixel displaying a color having a high absolute luminance value becomes larger. To perform the above-described second embodiment, the phase adjustment unit 182 can shift a target phase and at least one adjacent phase such that a target filter overlaps an adjacent filter. To perform the above-described third embodiment, the phase adjustment unit 182 can shift a target phase and at least one adjacent phase such that a target filter overlaps at least one adjacent filter in a single common area.

FIG. 17 is a block diagram of a preferred embodiment 182A of the phase adjustment unit 182 shown in FIG. 16 according to the present invention. The phase adjustment unit 182A includes a comparator 190 and a filter determiner 192. The phase adjustment unit 182A performs step 10A shown in FIG. 9.

To perform step 60 shown in FIG. 9, the comparator 190 receives an absolute luminance value of a color to be displayed by a target subpixel through an input terminal IN4, compares the received absolute luminance value of the color to be displayed by the target subpixel with a predetermined luminance value, and outputs a comparison result to the filter determiner 192.

To perform step 62 or 64, the filter determiner 192 determines a high-luminance filter or a low-luminance filter as a target filter in response to the comparison result received from the comparator 190 and outputs a determination result to the luminance value generation unit 184 through an output terminal OUT2. For example, when it is determined that the absolute luminance value of the color to be displayed by the target subpixel is greater than the predetermined luminance value based on the comparison result, the filter determiner 192 determines a high-luminance filter as the target filter. However, when it is determined that the absolute luminance value of the color to be displayed by the target subpixel is equal to or less than the predetermined luminance value based on the comparison result, the filter determiner 192 determines a low-luminance filter as the target filter.

To perform step 12 shown in EIG. 4, the luminance value generation unit 184 generates a relative luminance value of a target subpixel from a relative luminance value of at least one image pixel using a target filter having an adjusted target phase as it center and outputs the generated relative luminance value of the target subpixel through an output terminal OUT1. For these operations, the luminance value generation unit 184 can receive a target filter from, for example, a filter generator (not shown). The filter generator generates a target filter having a target phase as its center and can be provided within the phase adjustment unit 182 or within the luminance value generation unit 184 or can be separately provided outside. When the filter generator is provided within the phase adjustment unit 182, the luminance value generation unit 184 receives a target filter from the phase adjustment unit 182. When the filter generator is separately provided outside, the luminance value generation unit 184 receives a target filter through an input terminal IN3.

FIG. 18 is a block diagram of a preferred embodiment 184A of the luminance value generation unit 184 shown in FIG. 16 according to the present invention. The luminance value generation unit 184A includes a contribution degree determiner 210, a multiplier 212, a accumulator 214. The luminance value generation unit 184A shown in FIG. 18 performs step 12A shown in FIG. 13.

To perform step 140 shown in FIG. 13, the contribution degree determiner 210 determines a contribution degree of each of M×N coefficients included in a target filter received through an input terminal IN5 and outputs determined contribution degrees to the multiplier 212.

To perform step 142, the multiplier 212 multiplies each contribution degree determined by the contribution degree determiner 210 by a relative luminance value of an image pixel corresponding to a coefficient and outputs a multiplication result to the accumulator 214. For these operations, the multiplier 212 receives a relative luminance value of an image pixel corresponding to each coefficient through an input terminal IN6.

To perform step 144, the accumulator 214 accumulates M×N multiplication results received from the multiplier 212 and outputs an accumulation result as a relative luminance value of a target subpixel through an output terminal OUT3.

Consequently, according to an image display method and apparatus of the present invention, relative luminance values of all subpixels are determined, and a color of each target subpixel is displayed at brightness corresponding to a relative luminance value output through the output terminal OUT1.

Meanwhile, at least one computer program for controlling an image display apparatus according to the present invention can be stored on a computer-readable recording medium. The computer program can adjust a target phase of a target subpixel using a difference between an absolute luminance value of a color to be displayed by the target subpixel and an absolute luminance value of a color to be displayed by a subpixel adjacent to the target subpixel, and obtain a relative luminance value of the target subpixel from a relative luminance value of at least one image pixel using a target filter having the adjusted target phase as its center.

As described above, in an image display method and apparatus and a computer-readable recording medium for storing a computer program according to the present invention, subpixel rendering is achieved using different filters, that is, a relative luminance value to be displayed by a target subpixel is obtained using a target filter generated based on a difference in absolute luminance value between the target subpixel and adjacent subpixels, so that a color having a relatively low absolute luminance value can be displayed with a reduced color fringe and a color having a relatively high absolute luminance value can be displayed with an increased resolution. As a result, aliasing which is the cause of quality degradation generated in displaying high-resolution images can be reduced. In addition, since a resolution of an image can be improved without increasing the number of physical subpixels, the size of a driver chip can be reduced in comparison with increasing the number of physical subpixels to improve the resolution, fine processes can be eliminated, and the amount of light transmitted by filters can be increased. In particular, when white can be additionally displayed by subpixels besides red, green, and blue, the amount of output light can be increased. Also, when a primary color can be additionally displayed besides red, green, and blue, a color gamut displayed by an image display apparatus can be extended.

## Claims

1. A method of displaying an image using a display pixel including at least one subpixel displaying one among four or more colors, the method comprising:
(a) adjusting a target phase of a target subpixel using a difference between an absolute luminance value of a color to be displayed by the target subpixel and an absolute luminance value of a color to be displayed by at least one subpixel adjacent to the target subpixel; and
(b) obtaining a relative luminance value of the target subpixel from a relative luminance value of at least one image pixel using a target filter having the adjusted target phase as its center,
wherein a brightness of the color displayed by the target subpixel corresponds to the relative luminance value of the target subpixel.

2. The method of claim 1, wherein the four or more colors comprise a color having a high absolute luminance value.

3. The method of claim 2, wherein step (a) comprises shifting the target phase such that a distance between the target phase and a center of gravity of an adjacent subpixel displaying a color having the high absolute luminance value becomes farther.

4. The method of claim 1, wherein step (a) comprises shifting the target phase and an adjacent phase of at least one adjacent subpixel such that a target filter having the target phase as its center overlaps an adjacent filter having the adjacent phase as its center.

5. The method of claim 4, wherein step (a) comprises shifting the target phase and the adjacent phase such that the target filter overlaps the adjacent filter in a single common area.

6. The method of claim 1, wherein step (a) comprises:
(a1) determining whether the absolute luminance value of the color to be displayed by the target subpixel is greater than a predetermined luminance value;
(a2) when it is determined that the absolute luminance value of the color to be displayed by the target subpixel is greater than the predetermined luminance value, determining a high-luminance filter as the target filter; and
(a3) when it is determined that the absolute luminance value of the color to be displayed by the target subpixel is equal to or less than the predetermined luminance value, determining a low-luminance filter as the target filter.

7. The method of claim 6, wherein the predetermined luminance value is set to be approximately equal to an absolute luminance value of green.

8. The method of claim 6, wherein the high-luminance filter and the low-luminance filter change according to a position of the display pixel including the target subpixel in physical space.

9. The method of claim 6, wherein step (b) comprises:
(b1) determining a contribution degree of each of M×N coefficients included in the target filter, wherein M and N are integers equal to or greater than 1;
(b2) multiplying the determined contribution degree by a relative luminance value of the image pixel corresponding to each coefficient; and
(b3) accumulating M×N multiplication results and determining an accumulation result as the relative luminance value of the target subpixel, and
the contribution degree indicates how much the corresponding coefficient contributes to displaying the color of the target subpixel.

10. The method of claim 9, wherein the contribution degree changes according to at least one among a ratio between a resolution of an image to be displayed and a resolution of a displayed image, an arrangement of the subpixel, a color or luminance to be displayed by the subpixel, and a shape of the target filter.

11. The method of claim 9, wherein step (b1) comprises:
(b11) determining the size M×N of the target filter; and
(b12) determining a contribution degree of each of coefficients included in the high-luminance filter or the low-luminance filter, using the determined size.

12. The method of claim 11, wherein step (b11) comprises determining the size M×N according to a ratio between a resolution of the image to be displayed and a resolution of a displayed image.

13. The method of claim 6, wherein when it is determined that the absolute luminance value of the color to be displayed by the target subpixel is greater than the predetermined luminance value, step (a2) comprises positioning the target phase at the center of gravity of the target subpixel in physical space, and a center of the high-luminance filter determined as the target filter corresponds to the target phase positioned at the center of gravity of the target subpixel.

14. The method of claim 6, wherein when it is determined that the absolute luminance value of the color to be displayed by the target subpixel is greater than the predetermined luminance value, step (a2) comprises shifting the target phase such that a distance between the target phase and at least one adjacent phase becomes larger, a center of the high-luminance filter determined as the target filter corresponds to the shifted target phase, and the low-luminance filter has the adjacent phase as its center.

15. The method of claim 6, wherein when it is determined that the absolute luminance value of the color to be displayed by the target subpixel is equal to or less than the predetermined luminance value, step (a3) comprises shifting the target phase positioned at a center of gravity of the target subpixel and an adjacent phase positioned at a center of gravity of the adjacent subpixel so that the target filter overlaps an adjacent filter, and the low-luminance filter corresponds to the target filter overlapping the adjacent filter.

16. The method of claim 1, further comprising converting externally input three colors into the four or more colors before step (a).

17. The method of claim 6, wherein the color that is displayed by the target subpixel and has the absolute luminance value greater than the predetermined luminance value is one selected from the group consisting of Y, L, white, cyan, and yellow in an opponent color space.

18. The method of claim 6, wherein step (b) comprises:
making the target filter into a mask having a predetermined shape by minimizing a contribution degree of one particular coefficient among coefficient included in the target filter; and
obtaining the relative luminance value of the target subpixel from the relative luminance value of the at least one image pixel using the mask.

19. An apparatus for displaying an image using a display pixel including at least one subpixel displaying one among four or more colors, the apparatus comprising:
a phase adjustment unit which adjusts a target phase of a target subpixel using a difference between an absolute luminance value of a color to be displayed by the target subpixel and an absolute luminance value of a color to be displayed by at least one subpixel adjacent to the target subpixel; and
a luminance value generation unit which generates a relative luminance value of the target subpixel from a relative luminance value of at least one image pixel using a target filter having the adjusted target phase as its center,
wherein a brightness of the color displayed by the target subpixel corresponds to the generated relative luminance value of the target subpixel.

20. The apparatus of claim 19, wherein the four or more colors comprise a color having a high absolute luminance value.

21. The apparatus of claim 20, wherein the phase adjustment unit shifts the target phase such that a distance between the target phase and a center of gravity of an adjacent pixel displaying a color having the high absolute luminance value becomes larger.

22. The apparatus of claim 19, wherein the phase adjustment unit shifts the target phase and an adjacent phase of an adjacent subpixel such that a target filter having the target phase as its center overlaps an adjacent filter having the adjacent phase as its center.

23. The apparatus of claim 22, wherein the phase adjustment unit shifts the target phase and the adjacent phase such that the target filter overlaps the adjacent filter in a single common area.

24. The apparatus of claim 19, wherein the phase adjustment unit comprises:
a comparator which compares the absolute luminance value of the color to be displayed by the target subpixel with a predetermined luminance value; and
a filter determiner which determines one of a high-luminance filter and a low-luminance filter as the target filter in response to a comparison result and outputs a determination result to the luminance value generation unit.

25. The apparatus of claim 19, wherein the luminance value generation unit comprises:
a contribution degree determiner which determines a contribution degree of each of M×N coefficient(s) included in the target filter wherein M and N are integers equal to or greater than 1;
a multiplier which multiplies the determined contribution degree by a relative luminance value of the image pixel corresponding to each coefficient; and
an accumulator which accumulates M×N multiplication results and outputs an accumulation result as the relative luminance value of the target subpixel, and
the contribution degree indicates how much the corresponding coefficient contributes to displaying the color of the target subpixel.

26. The apparatus of claim 19, further comprising a color conversion unit which converts externally input three colors into the four or more colors and outputs a conversion result to the phase adjustment unit.

27. A computer-readable recording medium for storing at least one computer program to control an apparatus for displaying an image using a display pixel including at least one subpixel displaying one among four or more colors, the computer program:
adjusting a target phase of a target subpixel using a difference between an absolute luminance value of a color to be displayed by the target subpixel and an absolute luminance value of a color to be displayed by at least one subpixel adjacent to the target subpixel; and
obtaining a relative luminance value of the target subpixel from a relative luminance value of at least one image pixel using a target filter having the adjusted target phase as its center,
wherein a brightness of the color displayed by the target subpixel corresponds to the relative luminance value of the target subpixel.
